# EUROPÄISCHE PATENTSCHRIFT

(11) **EP 3 831 515 B1**
(45) Veröffentlichungstag und Bekanntmachung des Hinweises auf die Patenterteilung: **07.09.2022**
(21) Anmeldenummer: 19213569.7
(22) Anmeldetag: 04.12.2019
(51) Int. Cl.: B22F 10/28, B22F 10/36, B33Y 30/00, B33Y 50/02, G07C 3/00, B33Y 10/00

(54) **ERKENNEN VON SMOKE-EVENTS UND ELEKTRONENSTRAHLSCHMELZ-ANLAGE**
DETECTION OF SMOKE EVENTS AND ELECTRON BEAM MELTING SYSTEM
DÉTECTION DES ÉVÉNEMENTS DE FUMÉE ET INSTALLATION DE FUSION PAR BOMBARDEMENT ÉLECTRONIQUE

(43) Veröffentlichungstag der Anmeldung: 09.06.2021
(73) Patentinhaber: Siemens Aktiengesellschaft, 80333 München (DE)
(72) Erfinder: Drendel, Jan, 13355 Berlin (DE); Theile, Oliver, 13437 Berlin (DE)

(56) Entgegenhaltungen:
- EP-A2- 2 764 353
- WO-A1-2019/088091
- WO-A1-2019/136523
- US-A1- 2008 252 473
- US-A1- 2009 173 443
- US-A1- 2017 341 141

## Beschreibung

Die Erfindung betrifft eine Vorrichtung zum Erkennen eines Smoke-Events, eine Elektronenstrahlschmelz-Anlage mit einer derartigen Vorrichtung sowie ein Verfahren zum Betreiben einer Elektronenstrahlschmelz-Anlage.

Eine derartige Vorrichtung kommt beispielsweise in Elektronenstrahlschmelz-Anlage zum Einsatz. Das Elektronenstrahlschmelzen ist eine additive Fertigungstechnologie, bei der aufeinanderfolgende Pulverschichten jeweils selektiv geschmolzen werden, um einen zu fertigenden Körper schichtweise und additiv aufzubauen. Im Sonderfall des Elektronenstrahlschmelzens kann es vorkommen, dass sich die Pulverpartikel mit elektrischer Ladung aufladen, die durch den Elektronenstrahl in Form von Elektronen zugeführt wird. Dieser Effekt basiert vor allem auf dem hohen elektrischen Widerstand des Pulverbetts. Wenn die elektrische Ladung der einzelnen Pulverpartikel zu groß wird, so stoßen sich die Pulverpartikel gegenseitig ab. Wenn dabei die Schwerkraft bzw. die Haftkraft zwischen den Pulverpartikeln überschritten wird, so können sich die Partikel schlagartig aus dem Pulverbett herausheben, was sowohl die Pulverschicht zerstört als auch Pulverpartikel im Raum der Prozesskammer verteilt. Wenn die Pulverpartikel selbstständig aufgrund der von Ihnen aufgenommenen elektrischen Ladung ihre Position verändern und/oder sich im Raum der Prozesskammer verteilen so spricht man auch von einem sogenannten Smoke-Event. Die Bezeichnung Smoke bezieht sich dabei auf die in der Kammer verteilten Pulverpartikel, die ein ähnliches Aussehen aufweisen wie eine Rauchwolke, die sich über dem Pulverbett bildet. Diese Smoke-Events sind äußerst unerwünscht, da der Elektronenstrahl durch die in der Prozesskammer verteilten Partikel abgelenkt werden kann und die ursprünglich gleichmäßige Pulverschicht nun keine gleichmäßige Form mehr aufweist und somit die aktuelle Schicht nicht prozessgemäß aufgebracht bzw. aufgeschmolzen werden kann.

Das Dokument US2017/341141 A1 offenbart eine Elektronenstrahlschmelz-Anlage und das bekannte technische Problem eines in Elektronenstrahlschmelz-Anlagen auftretenden Smoke-Events.

Es ist nun Aufgabe dieser Erfindung eine Vorrichtung anzugeben, die es ermöglicht solche Smoke-Events besser vorherzusagen bzw. automatisierbar zu erkennen.

Diese Aufgabe wird durch eine Vorrichtung mit den im Anspruch 1 angegebenen Merkmalen gelöst. Die Vorrichtung zum Erkennen eines Smoke-Events in einer Elektronenstrahlschmelz-Anlage weist dazu eine Strommesseinrichtung und eine Auswerteeinheit auf. Die Strommesseinrichtung ist zum Erfassen eines Erdungsstroms ausgebildet und die Auswerteeinheit ist zum Erkennen eines Smoke-Events durch Auswerten des von der Strommesseinrichtung erfassten Erdungsstroms ausgebildet. Da der Elektronenstrahl einen Strom darstellt muss dieser letztendlich auch über eine Erdung der Elektronenstrahlschmelz-Anlage wieder abgeführt werden. Es hat sich herausgestellt, dass Smoke-Events mit einer charakteristischen Veränderung des Erdungsstroms einhergehen und daher die Auswerteeinheit anhand dieser Veränderungen im Erdungsstrom ein Smoke-Event erkennen können. Unterschreitet der Erdungsstroms beispielsweise einen Schwellwert so kann die Auswerteeinheit ein Smoke-Event erkennen. Ebenso kann die Auswerteeinheit eine steile, fallende Flanke und/oder ein Absinken des Erdungsstroms auf fast null als ein Smoke-Event detektieren. Das automatisierte Erkennen stellt einen erheblichen Vorteil gegenüber den aktuell nötigen optischen Überprüfungen durch den Bediener der Anlage dar und ermöglicht einen automatisierten Umgang mit Smoke-Events.

In einer weiteren Ausführungsform ist die Auswerteeinheit zum Auswerten eines Zeitverlaufs des Erdungsstroms ausgewertet. Der Zeitverlauf wird dabei zum Erkennen eines Smoke-Events ausgewählt. Im Zeitverlauf können erste Anzeichen eines Smoke-Events erkannt werden. Dies kann sich beispielsweise durch eine unerwartete Veränderung der Steigung des Stroms, zum Beispiel eine Verringerung des Stroms, ausdrücken. Das Berücksichtigen des Zeitverlaufs des Erdungsstroms ermöglicht eine weitergehende Betrachtung des Stroms und verbessert somit die Erkennungsgenauigkeit von Smoke-Events.

In einer weiteren Ausführungsform ist die Auswerteeinheit zum Auswerten eines Frequenzverlaufs des Erdungsstroms ausgebildet. Ein Smoke-Event kann hier beispielsweise durch Auffälligkeiten im Frequenzverlauf des Erdungsstroms erkannt werden. Es besteht die Möglichkeit über den Zeitverlauf des Erdungsstroms eine FFT laufen zu lassen, die eine solche Auswertung ermöglicht.

In einer weiteren Ausführungsform ist die Auswerteeinheit zum Erkennen eines Smoke-Events in Abhängigkeit eines Elektronenstrahlstroms ausgebildet. Wird nun zusätzlich zum Erdungsstrom auch der Elektronenstrahlstrom ausgewertet, so können Diskrepanzen zwischen zugeführtem Strom und abgeleitetem Strom erkannt und gegebenenfalls einem Smoke-Event zugeordnet werden, wenn die Diskrepanzen zu groß werden. Dabei können sowohl ein Verlauf des Erdungsstroms als auch ein Verlauf des Elektronenstrahlstroms ausgewertet und miteinander verglichen werden. Ebenso kann eine Differenz zwischen aktuellem Erdungsstrom und aktuellem Elektronenstrahlstrom gebildet werden, die ausgewertet werden und/oder als Regeldifferenz als Basis für eine Regelung des Elektronenstrahlstroms dienen kann. Der Elektronenstrahlstrom kann in der Elektronenstrahlquelle gemessen werden oder, wenn diese gesteuert werden kann, lediglich der Sollwert des Elektronenstrahlstroms ohne Messung für einen Vergleich verwendet werden.

In einer weiteren Ausführungsform ist die Strommesseinrichtung zum Erfassen des Erdungsstroms mit einer Abtastfrequenz von mindestens 1 kHz ausgebildet. In bevorzugten weiteren Ausführungsformen ist die Strommesseinrichtung zum Erfassen des Erdungsstroms mit einer Abtastfrequenz von mindestens 10, 20 oder 50 kHz ausgebildet. Dies ermöglicht ein besonders genaues analysieren des Erdungsstroms und ermöglicht im Hinblick auf die bei Elektronenstrahlanlagen sehr hohe Strahl- und damit Bearbeitungsgeschwindigkeit auch eine ausreichende Reaktionszeit.

In einer weiteren Ausführungsform weist die Auswerteeinheit zumindest ein trainiertes künstliches neuronales Netzwerk auf. Das neuronale Netzwerk erhält dabei den Erdungsstrom bzw. das Erdungsstromsignal und optional den Elektronenstrahlstrom bzw. das Elektronenstrahlstromsignal als Eingangsgröße, wertet diese Größen aus und gibt als Ausgangsgröße das Auftreten eines Smoke-Events aus. Das neuronale Netzwerk kann dabei ebenso Verläufe des Erdungsstroms bzw. des Elektronenstrahlstroms bzw. deren Frcquenzkennlinien als Eingangsgröße auswerten. Zum Trainieren des neuronalen Netzwerks kann dabei eine Elektronenstrahlanlage mit einer erfindungsgemäßen Vorrichtung dienen, wobei zum Kategorisieren der Daten bzw. zum Labeln der Daten z. B. eine manuelle Eingabe bzw. eine Bestätigung der automatisch erfassten Smoke-Events in den Eingangsgrößen verwendet wird. Als Ausgangsgröße kann das neuronale Netzwerk eine binäre Größe ausgeben, die ein Smoke-Event indiziert. Es ist alternativ oder ergänzend möglich, dass das neuronale Netzwerk eine Wahrscheinlichkeit für ein Auftreten eines Smoke-Events ausgibt, anhand der ein weiteres Vorgehen zum Beispiel ein Verringern des Elektronenstrahlstroms durchgeführt werden kann. Zum Trainieren bzw. Anlernen des Netzwerks kommen überwachtes Lernen (im Englischen: supervised learning) und unüberwachtes Lernen (im Englischen unsupervised learning) in Frage, je nachdem wie viele gelabelte Daten (hier: Smoke-Events und dazugehörige Stromverläufe) zur Verfügung stehen. Als Plattformen zur Implementierung kommen verbreitete Open Source Lösung wie beispielsweise TensorFlow oder Scikit-learn in Frage.

In einer weiteren Ausführungsform weist die Strommesseinrichtung einen Messwiderstand auf, der vorzugsweise mittels zumindest einer Überspannungsschutzvorrichtung abgesichert ist. Der Überspannungsschutz kann beispielsweise als eine Kombination von Gasentladungsröhren (kurz GDTs) mit Dioden ausgestaltet sein. Die Dioden dienen dabei als zusätzlicher Sicherheitsmechanismus, um bei einem schnellen Spannungsaufbau die Zeit zu überbrücken, bis die Gasentladungsröhre zündet.

In einer weiteren Ausführungsform ist die Strommesseinrichtung zum Erfassen des Erdungsstroms an einer Erdungsleitung ausgebildet. Üblicherweise sind das Pulverbett und/oder die Bauplatte der Elektronenstrahlschmelz-Anlage geerdet. Die Erdungsleitung kann dabei zur Stromerfassung erweitert werden. Dabei kann einen Messwiderstand zum Einsatz kommen. Idealerweise wird der Strom an einer zentralen Erdungsleitung gemessen, da sonst Stromaufteilungseffekte berücksichtigt werden müssen. Als Strommesseinrichtung können zum Beispiel Halleffektwandler, Flux-Gate-Wandler und/oder galvanisch getrennte Stromwandler zum Einsatz kommen. Diese haben den Vorteil, dass diese um die Erdungsleitung herum angeordnet werden können, ohne eine zusätzliche Abzweigung bzw. einen eingefügten Strommesswiderstand zu benötigen.

Die Aufgabe wird weiterhin durch eine Elektronenstrahlschmelz-Anlage gelöst, die eine erfindungsgemäße Vorrichtung zum Erkennen eines Smoke-Events aufweist. Die Elektronenstrahlschmelz-Anlage weist dabei eine Elektronenstrahlquelle auf, die mittels einer Beschleunigungsspannung einen Elektronenstrahl auf sehr hohe Geschwindigkeit (zum Beispiel halbe Lichtgeschwindigkeit) beschleunigt und diesen so ansteuert das im Pulverbett schichtweise ein Bauteil aufgebaut wird. Der Elektronenstrahl schmilzt dabei das im Pulverbett befindliche Pulver selektiv auf. Eine Integration der Vorrichtung in die Anlage selbst hat den großen Vorteil, dass nicht nur überwachende Maßnahmen durchgeführt werden können sondern auch aktive Gegenmaßnahmen bei Erkennen eines Smoke-Events ohne weitere Umwege durchgeführt werden können.

In einer weiteren Ausführungsform weist die Elektronenstrahlschmelz-Anlage eine Steuerung auf. Die Steuerung ist dabei zum Ansteuern einer Elektronenstrahlquelle ausgebildet. Bei Erkennen eines Smoke-Events kann die Steuerung die Elektronenstrahlquelle z. B. abschalten.

in einer weiteren Ausführungsform weist die Elektronenstrahlschmelz-Anlage eine Steuerung auf, die zum Ansteuern der Elektroncnstrahlquelle so ausgebildet ist, dass das Smoke-Event verhindert, hinsichtlich der Intensität verringert und/oder beendet wird. Dies kann mit einer Veränderung der Beschleunigungsspannung und/oder des Elektronenstrahlstroms einhergehen.

In einer weiteren vorteilhaften Ausführungsformen ist die Vorrichtung innerhalb eines geerdeten Gehäuses der Elektronenstrahlschmelz-Anlage angeordnet. Dies hat den Vorteil, dass zu Messzwecken keine über die sowieso vorhandenen Sicherheitsmaßnahmen der Anlage hinausgehenden Sicherheitsmaßnahmen vorgesehen werden müssen. Des Weiteren können die Messdaten bzw. Erkannten Smoke-Events von der Auswerteeinheit direkt an eine Steuerung der Anlage weitergeleitet werden. Es ist ebenso denkbar, dass die Steuerung der Anlage die Auswertung der Strommesswerte direkt selbst vornimmt, die Steuerung also die Funktion der Auswerteeinheit integriert.

Die Aufgabe wird weiterhin durch ein Verfahren zum Betreiben einer Elektronenstrahlschmelz-Anlage gelöst. Dabei wird ein Bauteil in einem Pulverbett mittels eines Elektronenstrahls erzeugt. Das Verfahren umfasst dabei ein Auswerten eines Erdungsstroms zum Erkennen eines Smoke-Events und ein Verringern eines Elektronenstrahlstroms bei Erkennen eines anstehenden und/oder bestehenden Smoke-Events.

Im Folgenden wird die Erfindung anhand der in den Figuren dargestellten Ausführungsbeispiele näher beschrieben und erläutert. Es zeigen:
- FIG 1: eine Ausführungsform einer Elektronenstrahlschmelz-Anlage mit einer Vorrichtung und
- FIG 2: ein Smoke-Event in der Elektronenstrahlschmelz-Anlage.

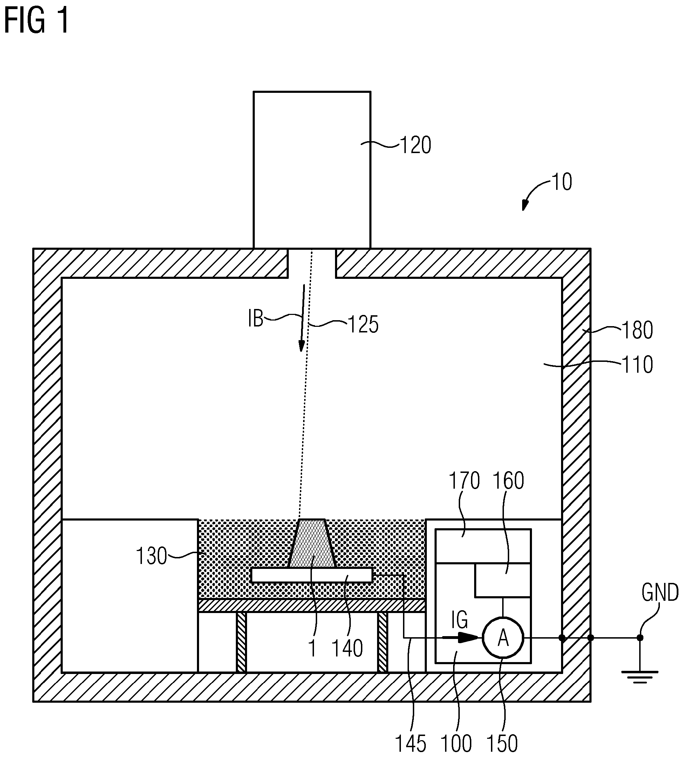

FIG 1 zeigt schematisch eine Elektronenstrahlschmelz-Anlage 10 in der gerade ein Bauteil 1 schichtweise in einem Pulverbett 130 aufgebaut wird. Die Elektronenstrahlschmelz-Anlage 10 weist dazu eine Prozesskammer 110 auf, in der eine Bauplatte 140 innerhalb des Pulverbetts 130 angeordnet ist. Eine Elektronenstrahlquelle 120 erzeugt einen Elektronenstrahl 125, welcher das im Pulverbett 130 vorhandene Pulver schichtweise aufschmilzt und damit das Bauteil 1 schichtweise erzeugt. Der Elektronenstrahl 125 weist dabei einen Elektronenstrahlstrom IB auf. Die Bauplatte 140 ist in diesem Fall mittels einer Erdungsleitung 145 über eine Masse GND geerdet. Die Masse GND ist dabei ebenso an das Gehäuse 180 der Elektronenstrahlschmelz-Anlage 10 angebunden. Die Erdungsleitung 145 weist eine Strommesseinrichtung 150 auf, die den von der Bauplatte 140 bzw. aus dem Pulverbett 130 über die Erdungsleitung 145 hin zur Masse GND fließenden Strom IG und/oder das zugehörige Erdungsstromsignal erfasst. Der Erdungsstrom IG wird schließlich von einer Auswerteeinheit 160 ausgewertet. Diese Auswerteeinheit 160 kann sowohl einzelne Stromwerte als auch Zeitsignale auswerten. Eine Steuerung 170 steuert dabei die Elektronenstrahlquelle 120 an und kann dabei auf die von der Auswerteeinheit 160 zur Verfügung gestellte Auswertung bzgl. des Vorliegens eines Smoke-Events zurückgreifen. Die Auswerteeinheit 160 und die Steuerung 170 sind dabei nur schematisch innerhalb des Gehäuses gezeichnet. Diese können nicht zwingend innerhalb der geschlossenes Baukammer liegen. bzw. gerade 170 liegt definitiv außerhalb, da der Schaltschrank ähnliche Ausmaße hat wie der Bauraum.

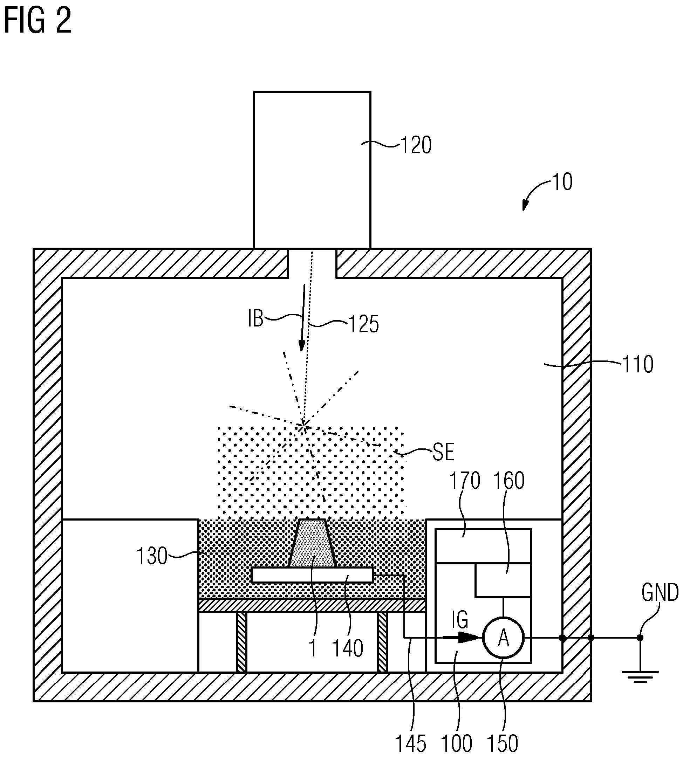

FIG 2 zeigt die aus FIG 1 bekannte Anlage 10, wobei hier ein Smoke-Event SE in der Prozesskammer 110 vorliegt. Zu sehen ist, dass über dem Pulverbett 130 fein verteilte Partikel in der Prozesskammer 110 als ein Smoke-Event SE zu sehen sind. Der Elektronenstrahl 125 prallt dabei auf eine kritische Anzahl von Partikeln, wird dadurch abgelenkt und/oder gestreut und/oder reflektiert und gelangt dementsprechend mehr mit der vorgesehenen Energie und Trajektorie zum Bauteil 1. Dies hat zur Folge, dass die aktuell aufzuschmelzende Pulverschicht gar nicht oder nur unvollständig aufgeschmolzen wird. In diesem Fall verändert sich der Erdungsstrom IG so, dass die Auswerteeinheit 160 das Vorliegen des Smoke-Events SE erkennt. Die Steuerung 170 kann somit den Elektronenstrahl 125 und/oder den Elektronenstrahlstrom IB einstellen, um das Smoke-Event zu beenden. Es kann dabei notwendig sein, dass der Elektronenstrahl 125 komplett deaktiviert wird. Besonders vorteilhaft ist es aber, wenn die Auswerteeinheit 160 bereits die ersten Anzeichen eines Smoke-Events SE erkennt (z. B. eine Veränderung im Erdungsstrom oder eine zu groß werdende Differenz aus Erdungsstrom IG und Elektronenstrahlstrom IB) und den Elektronenstrahl 125 dementsprechend steuert, z. B. durch eine Verringerung des Stroms des Elektronenstrahls 125 oder ein kurzes Ablenken des Elektronenstrahls 125 in eine Zone, in der die Partikel nicht so stark elektrisch aufgeladen sind. Nachdem die Steuerung 170 Maßnahmen ergriffen hat und sich die Partikel wieder gesetzt haben kann eine neue Pulverschicht aufgetragen werden und/oder das Pulverbett mehrfach gerakelt werden. Die Steuerung kann dann mit der geplanten Fertigstellung des Bauteils 1 fortfahren.

Weiterhin hat es sich als vorteilhaft bzgl. der Störfestigkeit der Vorrichtung 100 erwiesen, wenn die Erdungsleitung 145, die in der Prozesskammer 110 das Pulverbett 130 bzw. die Bauplatte 140 erdet, eine aus sehr hitzebeständigem Material, z. B. Glasfasern, gewebte Isolierung aufweist, die besonders temperaturbeständig ist. Weiterhin ist es für die Störfestigkeit vorteilhaft, wenn Peripheriegeräte, z. B. Thermoelemente, zum Einsatz kommen, dass diese geerdet sind und die Erdung mit der Erdungsleitung 145 zusammengeführt wird, um zu vermeiden, dass Ströme anderweitig geerdet werden.

Zusammenfassend betrifft die Erfindung eine Vorrichtung (100) zum Erkennen eines Smoke-Events (SE) in einer Elektronenstrahlschmelz-Anlage (10). Um Smoke-Events besser vorherzusagen bzw. automatisierbar zu erkennen, wird vorgeschlagen, dass die Vorrichtung eine Strommesseinrichtung (150), die zum Erfassen eines Erdungsstroms (IG) ausgebildet ist, und eine Auswerteeinheit (160), die zum Erkennen eines Smoke-Events (SE) durch Auswerten des Erdungsstroms (IG) ausgebildet ist, aufweist. Die Erfindung betrifft weiterhin eine Elektronenstrahlschmelz-Anlage (10) sowie ein Verfahren zum Betreiben einer solchen Anlage.

### Bezugszeichen:

- 1: Bauteil
- 10: Elektronenstrahlschmelz-Anlage
- 100: Vorrichtung
- 110: Prozesskammer
- 120: Elektronenstrahlquelle
- 125: Elektronenstrahl
- 130: Pulverbett
- 140: Bauplatte
- 145: Erdungsleitung
- 150: Strommesseinrichtung
- 160: Auswerteeinheit
- 170: Steuerung der EBM Anlage
- 180: geerdetes Gehäuse
- IG: Erdungsstrom
- IB: Elektronenstrahlstrom

## Patentansprüche

1. Vorrichtung (100) zum Erkennen eines Smoke-Events (SE) in einer Elektronenstrahlschmelz-Anlage (10), aufweisend eine Strommesseinrichtung (150), die zum Erfassen eines Erdungsstroms (IG) ausgebildet ist, und
eine Auswerteeinheit (160), die zum Erkennen eines Smoke-Events (SE) durch Auswerten des Erdungsstroms (IG) ausgebildet ist.

2. Vorrichtung (100) nach Anspruch 1, wobei die Auswerteeinheit (160) zum Auswerten eines Zeitverlaufs des Erdungsstroms (IG) zum Erkennen eines Smoke-Events (SE) ausgebildet ist.

3. Vorrichtung (100) nach Anspruch 1 oder 2, wobei die Auswerteeinheit (160) zum Auswerten eines Frequenzverlaufs des Erdungsstroms (IG) zum Erkennen eines Smoke-Events (SE) ausgebildet isL.

4. Vorrichtung (100) nach einem der vorhergehenden Ansprüche, wobei die Auswerteeinheit (160) zum Erkennen eines Smoke-Events (SE) in Abhängigkeit eines Elektronenstrahlstroms (IB) ausgebildet ist.

5. Vorrichtung (100) nach einem der vorhergehenden Ansprüche, wobei die Strommesseinrichtung (150) zum Erfassen des Erdungsstroms (IG) mit einer Abtastfrequenz von mindestens 1 kHz, insbesondere mindestens 10, 20 oder 50 kHz, ausgebildet ist.

6. Vorrichtung (100) nach einem der vorhergehenden Ansprüche, wobei die Auswerteeinheit (160) zumindest ein trainiertes künstliches neuronales Netzwerk (165) aufweist, das den Erdungsstrom (IG) und optional den Elektronenstrahlstrom (IB) als Eingangsgröße auswertet und ein Auftreten eines Smoke-Events (SE) als Ausgangsgröße ausgibt.

7. Vorrichtung (100) nach einem der vorhergehenden Ansprüche, wobei die Strommesseinrichtung (150) einen Messwiderstand (R1) aufweist, der insbesondere mittels zumindest einer Überspannungsschutzvorrichtung (GDT1, GDT2) abgesichert ist.

8. Vorrichtung (100) nach einem der vorhergehenden Ansprüche, wobei die Strommesseinrichtung (150) zum Erfassen des Erdungsstroms (IG) an einer Erdungsleitung (145) ausgebildet ist.

9. Elektronenstrahlschmelz-Anlage (10) aufweisend eine Vorrichtung (100) nach einem der vorhergehenden Ansprüche.

10. Elektronenstrahlschmelz-Anlage (10) nach Anspruch 9, aufweisend eine Steuerung (170), die zum Ansteuern einer Elektronenstrahlquelle (120) auf Basis eines erkannten Smoke-Events (SE) ausgebildet ist.

11. Elektronenstrahlschmelz-Anlage (10) nach Anspruch 10, wobei die Steuerung (170) zum Ansteuern der Elektronenstrahlquelle (120) ausgebildet ist, sodass das Smoke-Event (SE) verhindert und/oder beendet wird.

12. Elektronenstrahlschmelz-Anlage (10) nach einem der Ansprüche 9 bis 11, wobei die Vorrichtung (100) innerhalb eines geerdeten Gehäuses (180) der Elektronenstrahlschmelz-Anlage (100) angeordnet ist.

13. Verfahren zum Betreiben einer Elektronenstrahlschmelz-Anlage (10), wobei ein Bauteil (1) in einem Pulverbett (130) mittels eines Elektronenstrahls (125) erzeugt wird, umfassend ein Auswerten eines Erdungsstroms (IG) zum Erkennen eines Smoke-Events (SE) und ein Verringern eines Elektronenstrahlstroms (IB) bei Erkennen eines anstehenden und/oder bestehenden Smoke-Events (SE).

## Claims

1. Apparatus (100) for identifying a smoke event (SE) in an electron beam melting installation (10), comprising a current measuring device (150) configured for detecting a grounding current (IG), and
an evaluation unit (160) configured for identifying a smoke event (SE) by evaluating the grounding current (IG).

2. Apparatus (100) according to Claim 1, wherein the evaluation unit (160) is configured for evaluating a time profile of the grounding current (IG) for identifying a smoke event (SE).

3. Apparatus (100) according to Claim 1 or 2, wherein the evaluation unit (160) is configured for evaluating a frequency profile of the grounding current (IG) for identifying a smoke event (SE).

4. Apparatus (100) according to any of the preceding claims, wherein the evaluation unit (160) is configured for identifying a smoke event (SE) depending on an electron beam current (IB).

5. Apparatus (100) according to any of the preceding claims, wherein the current measuring device (150) is configured for detecting the grounding current (IG) with a sampling frequency of at least 1 kHz, in particular at least 10, 20 or 50 kHz.

6. Apparatus (100) according to any of the preceding claims, wherein the evaluation unit (160) comprises at least one trained artificial neural network (165), which evaluates the grounding current (IG) and optionally the electron beam current (IB) as input variable and outputs an occurrence of a smoke event (SE) as output variable.

7. Apparatus (100) according to any of the preceding claims, wherein the current measuring device (150) comprises a measuring resistor (R1), which is safeguarded in particular by means of at least one overvoltage protection apparatus (GDT1, GDT2).

8. Apparatus (100) according to any of the preceding claims, wherein the current measuring device (150) is configured for detecting the grounding current (IG) on a grounding line (145).

9. Electron beam melting installation (10) comprising an apparatus (100) according to any of the preceding claims.

10. Electron beam melting installation (10) according to Claim 9, comprising a controller (170) configured for controlling an electron beam source (120) on the basis of an identified smoke event (SE).

11. Electron beam melting installation (10) according to Claim 10, wherein the controller (170) is configured for controlling the electron beam source (120) such that the smoke event (SE) is prevented and/or ended.

12. Electron beam melting installation (10) according to any of Claims 9 to 11, wherein the apparatus (100) is arranged within a grounded housing (180) of the electron beam melting installation (100).

13. Method for operating an electron beam melting installation (10), wherein a component (1) is produced in a powder bed (130) by means of an electron beam (125), comprising evaluating a grounding current (IG) for identifying a smoke event (SE) and reducing an electron beam current (IB) upon an upcoming and/or existing smoke event (SE) being identified.

## Revendications

1. Système (100) de détection d'un smoke-event (SE) dans une installation (10) de fusion par bombardement électronique, comportant un dispositif (150) de mesure du courant, qui est constitué pour le relevé d'un courant (IG) de mise à la terre, et une unité (160) d'analyse, qui est constituée pour la détection d'un smoke-event (SE) par analyse du courant (IG) de mise à la terre.

2. Système (100) suivant la revendication 1, dans lequel l'unité (160) d'analyse est, pour la détection d'un smoke-event (SE), constituée pour l'analyse d'une courbe en fonction du temps du courant (IG) de mise à la terre.

3. Système (100) suivant la revendication 1 ou 2, dans lequel l'unité (160) d'analyse est, pour la détection d'un smoke-event (SE), constituée pour l'analyse d'une courbe de fréquence du courant (IG) de mise à la terre.

4. Système (100) suivant l'une des revendications précédentes, dans lequel l'unité (160) d'analyse est constituée pour la détection d'un smoke-event (SE) en fonction d'un courant (IB) de faisceau électronique.

5. Système (100) suivant l'une des revendications précédentes, dans lequel le dispositif (150) de mesure de courant est constitué pour le relevé du courant (IG) de mise à la terre à une fréquence d'échantillonnage d'au moins 1 kHz, notamment d'au moins 10, 20 ou 50 kHz.

6. Système (100) suivant l'une des revendications précédentes, dans lequel l'unité (160) d'analyse a au moins un réseau (165) neuronal artificiel ayant subi un apprentissage, qui analyse le courant (IG) de mise à la terre et éventuellement le courant (IB) du faisceau électronique et donne une apparition d'un smoke-event (SE) sous la forme d'une grandeur de sortie.

7. Système (100) suivant l'une des revendications précédentes, dans lequel le dispositif (150) de mesure du courant a une résistance (R1) de mesure, qui est sécurisée, notamment au moyen d'au moins un système (GDT1, GTDT2) de protection vis-à-vis d'une surtension.

8. Système (100) suivant l'une des revendications précédentes, dans lequel le dispositif (150) de mesure du courant est constitué pour le relevé du courant (IG) de mise à la terre sur une ligne (145) de mise à la terre.

9. Installation (10) de fusion par bombardement électronique, comportant un système (100) suivant l'une des revendications précédentes.

10. Installation (10) de fusion par bombardement électronique suivant la revendication 9, comportant une commande (170), qui est constituée pour la commande d'une source (120) de faisceau électronique sur la base de la détection d'un smoke-event (SE).

11. Installation (10) de fusion par bombardement électronique suivant la revendication 10, dans laquelle la commande (170) est constituée pour la commande de la source (120) du faisceau électronique, de manière à empêcher le smoke-event (SE) et/ou à y mettre fin.

12. Installation (10) de fusion par bombardement électronique suivant l'une des revendications 9 à 11, dans laquelle le système (100) est disposé à l'intérieur d'un boîtier (180) mis à la terre de l'installation (100) de fusion par bombardement électronique.

13. Procédé pour faire fonctionner une installation (10) de fusion par bombardement électronique, dans lequel on produit une pièce (1) dans un lit (130) de poudre, au moyen d'un faisceau (125) électronique, comprenant une analyse d'un courant (IG) de mise à la terre, pour la détection d'un smoke-event (SE) et une diminution d'un courant (IB) du faisceau électronique à la détection d'un smoke-event (SE) imminent et/ou existant.
